# EUROPEAN PATENT APPLICATION

(11) **EP 2 629 267 A2**
(43) Date of publication of application: **21.08.2013**
(21) Application number: 12195781.5
(22) Date of filing: 06.12.2012
(51) Int. Cl.: G06T 19/00

(54) **Real-time compositing of live recording-based and computer graphics-based media streams**

(30) Priority: 16.02.2012 US 201261599905 P
(71) Applicant: Crytek GmbH, 60322 Frankfurt am Main (DE)
(72) Inventor: Yerli, Cevat, 60314 Frankfurt/Main (DE)
(74) Representative: Schmidt, Steffen

(57) **Abstract**

The present invention relates to providing composite media streams based on a live recording of a real scene and a synchronous virtual scene. A method for providing composite media streams comprises recording a real scene using a real camera; creating a three-dimensional representation of the real scene based on the recording; synchronizing a virtual camera inside a virtual scene with the real camera; generating a representation of the virtual scene using the virtual camera; compositing at least the three-dimensional representation of the real scene with the representation of the virtual scene to generate a media stream; and providing the media stream at the real camera. A camera device, a processing pipeline for compositing media streams, and a system are defined.

## Description

### TECHNICAL FIELD

The present invention relates to real-time compositing of media streams, and generally to providing composite media streams including computer graphics, which are based on recording of live scenes, on respective recording cameras in real-time. In particular, the present invention relates to a camera device that is capable of recording a live scene and simultaneously displaying a media stream that comprises computer graphics-based components, which are synchronized with the real live scene.

### BACKGROUND

Embedding computer-generated graphical objects in films is a well-known technique. Computer graphics is used to enhance effects of a film and to enable, for example, fantasy-like characters and environments, which normally would be difficult to create with classical non-digital approaches. Generally, during production of a film different sources and respective material, such as real scenes and computer-generated objects are combined in one final picture. Typically, these sources are created independently using different methods and techniques, such as live scenes with real actors, computer graphics (CG) animations, matte paintings, and others. Also, some sources may not be created until the live scenes have been shot. After the respective source pictures have been created, they are combined in a plurality of separate compositing steps. Obviously, even for films with a very short duration, this processing requires a great amount of time.

In addition, problems that occur during processing of a source material downstream of recording of the live scenes, such as mismatches detected during generation of CG animations with regard to the live scenes, often cannot be resolved leading to a decreased quality of the resulting film, or even require re-shooting of the live scenes, which may impose significant additional costs. Similarly, any changes of the material later on are difficult, very expensive and sometimes even impossible.

In order to help to overcome these problems, pre-visualization tools have been employed to provide an idea about how the final product might look. Yet, pre-visualization tools are not capable of providing results that resemble the final version and never look exactly like the final product. Also, these tools still require a significant amount of time to generate a pre-visualization and often require that the production team interrupts the recording of the live scenes and waits for the pre-visualization.

In view of the above, one object of the present invention is to improve the production process of film making involving live scenes and computer graphics material. In particular, one object of the present invention is to enable an instantaneous control during production of CG-enhanced or CG-generated films.

### SUMMARY

The problem is solved by a method for providing composite media streams, a camera device, a processing pipeline, and a system as defined in the independent claims. Preferred embodiments of the invention are defined in the corresponding dependent claims.

A method for providing composite media streams according to the present disclosure comprises a recording a real scene using a real camera. Based on the recording, a three-dimensional representation of the real scene is created. Furthermore, a virtual camera inside a virtual scene is synchronized with the real camera, and a representation of the virtual scene using the virtual camera is generated. The method further comprises compositing at least the three-dimensional representation of the real scene with the representation of the virtual scene to generate a media stream. The resulting media stream is provided at the real camera.

The inventive method preferably combines four elements: (1) a real camera, which may be any suitable recording device capable of recording the live scene, preferably in high quality, (2) a virtual camera placed inside a virtual scene, such as a real time-rendered computer graphics environment, wherein the virtual camera is synchronized with the real camera, (3) a compositing unit that directly combines media streams derived from the real and virtual cameras into one media stream, preferably in real-time, and (4) a direct output of the resulting media stream at the real camera, such as on a monitor of the camera as well as any other suitable control display. Thus, a picture taken by the real camera will be directly and instantaneously composed with a media stream including rendered computer graphics data of a virtual scene which corresponds to the real scene. The resulting picture will therefore directly allow to assess and evaluate the current work without any interruption of the working and production process.

The recording of the real scene is used to create a three-dimensional (3D) representation of the real scene. The 3D representation may be build by automatically extracting virtual objects from the visual data of the recording and, in particular, forming meshes and 2D and 3D textures related to the virtual objects. In addition, the virtual objects may be animated to correspond to the action in the real scene. For example, objects in the real scene may be tracked, in order to extract motion data associated with the respective virtual object. The extracted data may be combined in the 3D representation of the real scene.

The recording of the real scene is also used to extract data which allows for determination of a spatial configuration of the real camera with regard to the real scene. This determination may be further enhanced with data provided during creation of the 3D representation. Also other spatial data may be captured during recording and used to determine, for example, a position, orientation and velocity of the real camera. The spatial configuration of the real camera with regard to the real scene may be used to synchronize the virtual camera with regard to the virtual scene. In addition, other parameters of the virtual camera, such a focal length, image format, principal point, aperture, shutter time, focus, and others may be updated to match the respective parameters of the real camera.

The virtual camera is used to generate a representation of the virtual scene. In particular, the virtual camera may be used to capture a virtual scene of a real-time virtual environment, which may include simulated and animated CG objects and geometry as well as environmental data. The real-time virtual environment may be driven by a real-time 3D engine. The virtual camera is used to determine all perceivable data of the virtual environment from the point of view of the virtual camera. Hence, the representation of the virtual scene may comprise all necessary data to describe the perceivable CG objects and geometry of the virtual scene.

At least the 3D representation of the real scene and the representation of the virtual scene are combined into a resulting media stream. In addition, further media streams may be included during compositing. For example, one or more input media streams may be pre-recorded and composed in real-time into the resulting media stream. The resulting media stream may comprise any media data, such as rendered video data and audio data. The resulting media stream may be directly transferred to the real camera and displayed at the real camera.

The system greatly improves the production of computer graphics-based media streams, since it allows to film live action in a real scene that is instantly placed inside a three-dimensional virtual scene and can be reviewed in real-time preferably without any delay or within a short duration of time. Thus, the final media stream is provided directly at the real camera. Hence, any problems with regard to the final composition of the source material can be immediately detected and the recording of the real scene can be adjusted in order to handle such problems. Consequently, the present invention greatly reduces production costs by speeding up the production cycles.

Preferably, the media stream is provided at the real camera synchronous to the recording of the real scene in real-time. Naturally, the processing of the recording and the corresponding output on the real camera may cause a certain delay. Yet, the use of a real-time 3D engine and the direct integration of the real and virtual scenes enables a very fast computation, such that the resulting media stream is available at the real camera in real-time, i.e., within a short period of time, which is preferably unnoticeable to a human operator of the real camera or at least with a certain delay, which is not perceived as disturbing for the respective operator, such as of less than 1.0 second, preferably of less than 0.5 seconds, and most preferably of less than or equal to 100 ms.

In a preferred embodiment, the real camera is a stereoscopic camera. The real camera may capture stereo images and provide the stereo recording in any suitable format capable of transferring stereo data.

According to a particularly preferred embodiment, said recording of the real scene further includes capturing depth information of the real scene using one or more sensors, preferably at least one infrared sensor. Other sensor and imaging techniques to capture depth information of a real scene may be used as well. The sensors may be directly integrated within the real camera or may be attached or combined with the real camera in close proximity. The depth information may be provided as a further image layer of the recording or as a separate data stream. In the later case, the recording and the data streams may be synchronized in a suitable way to enable a mapping of the depth information on the visual data of the recording.

According to another embodiment, said creating of the three-dimensional representation of the real scene includes computing depth information based on the recording. In particular, the captured depth information and the visual data of the recording, such as stereo data, may be combined to enable an accurate depth analysis of the recorded real scene. The depth analysis may be combined with positional data of the real camera to compute depth information, which may be used as a basis for creating the three-dimensional representation of the real scene.

In yet another preferred embodiment, said creating of the three-dimensional representation of the real scene further includes generating data for one or more virtual objects based on the recording, including at least one of motion data, meshes, and textures. In particular, all filmed objects, such as static props, vegetation, living persons or animals, or anything else, as much as the landscape or buildings are generated as 3D meshes of virtual objects. Furthermore, based on the recording, such as stereo images, the virtual objects are skinned with textures. The meshes may be combined with respective textures resulting in a one to one virtual copy of the recorded object.

The continuous stream of stereo images may further be used to extract the motion data for the respective virtual objects that are preferably mapped to a skeleton, representing the kinematics of the underlying virtual object. Furthermore, if motion tracking data are available for a real articulated object in the real scene, the motion tracking data may be mapped to the motion of the skeleton of the related virtual object. Pre-defined skeletons may be used for kinematics of well known articulated objects, such as human beings or animals. In addition, skeletal data may be derived automatically from the motion of the meshes and respective degrees of freedom of the motion. The motion of a virtual object may be calculated as an animation track. The approach allows for animation of simple static objects as well as kinematics and animation of complex objects, such as human characters, including animations of the full body and facial animations. The combination of meshes, textures and all motion data results in a lifelike one to one representation of any moving or static object of the real scene. Further combinations of the extracted and generated data may be used to improve the 3D representation of the real scene.

In a further embodiment, previously generated meshes and textures of a virtual object may be updated based on the current recording. Thus, the longer the real scene or an object within the real scene are recorded, the better the quality and precision of the corresponding virtual object will be. For example, to generate the full data for a virtual object corresponding to an actor, the real camera may execute a full scan around the actor, such as a 360° walk around the actor. The resulting extracted and generated data of the 3D representation of the real scene are continuously updated and improved to closely resemble the real recording. For example, the level of detail of extracted meshes may be improved by interpolating subsequently extracted meshes. Furthermore, the texture quality may increase continuously as long as the object stays in view of the real camera.

According to a preferred embodiment, said creating the three-dimensional representation of the real scene further includes selecting at least some of the virtual objects to be included in the three-dimensional representation. For example, an operator may define which of the filmed real objects should be used in the further processing, and which objects are to be ignored. The selection may be done after an initial recording of the real scene and may be used for the subsequent production cycle or a certain period of time.

According to another embodiment, said creating of the three-dimensional representation of the real scene further includes combining the generated data, including, for each selected virtual object, applying at least some of the textures of the virtual object on the meshes of the virtual object, and animating the virtual object using the motion data. In particular, every selected virtual object of the 3D representation may be composited with the real recording and the CG data into one given composited scene of the media stream.

In a preferred embodiment, said synchronizing of the virtual camera comprises adjusting camera parameters of the virtual camera based on at least some camera parameters of the real camera.

Preferably, the camera parameters of the virtual camera are modified by at least one of position, orientation, and velocity of the real camera.

According to another embodiment, at least some of the camera parameters are derived from at least one of stereo images of the recording, motion tracking data of the real camera, and data provided by the real camera.

In yet another embodiment, said generating of the representation of the virtual scene includes updating computer graphics objects in the virtual scene. The virtual environment hosting the CG objects may be driven by a 3D engine, which may simulate a virtual world with physics, lighting, shadows and others.

According to another embodiment, said compositing includes synchronizing the three-dimensional representation of the real scene with the representation of the virtual scene using at least one of parameters of the real and virtual cameras and one or more reference objects. In particular, the two or more input streams, including the input stream resulting from the 3D representation of the real scene and the input stream resulting from the representation of the virtual scene, may be synchronized using the real and virtual cameras (or other objects) as reference points. For example, the moment the operator of the real camera moves the real camera forward, the virtual camera preferably moves the same distance, thereby updating the view in the virtual scene and matching it with the recorded live action.

In yet another preferred embodiment, said compositing further includes compositing the three-dimensional representation of the real scene and the representation of the virtual scene with the recording of the real camera.

In a further embodiment, the media stream is further provided at one or more display devices. In particular, further to a camera monitor, additional monitors can be linked to the output media stream in order to show the composited signal (or any other layer of the composite) to viewers, such as a film director. The media stream may be transferred to any monitor via a suitable network, such as the Internet, or using a dedicated network adapted to real-time streaming of media.

According to a preferred embodiment, the method further comprises controlling the real camera using at least one of a mechanical control, a touchpad, and a remote device. The real camera may provide access to a variety of functions, such as start, stop, pause, etc. that may be controlled and managed via a touchpad, for example, located next to a screen or monitor of the camera, or a touch screen. Also the monitor itself may be touch sensitive, thereby allowing setting of the respective functions. Several functions, like focus, field of view, etc. may as well be accessible through real buttons and controls next to the monitor, for example, attached on the bottom, top or a side. Further functionality that is usually not part of the electronic or digital menus of a real camera, like changing color or effect filters, or applying 3D effects such as a virtual camera shake, can be added to the camera menus, or may be controlled via the remote device. All camera functions may be remotely controlled by another connected monitor or a remote control device. The remote control device may be, for example, coupled to the real camera using any suitable connection or communication network, such as a wired or a wireless connection or network. For example, the remote control device may be provided as a portable device, such as a laptop, tablet PC, palmtop, or a mobile device, such as a Smartphone, or any other suitable remote device. All effects that may have an influence on the virtual camera can be programmed to be used automatically. Any effect that is used manually during recording can be changed later on, and any recorded effect can be applied to other recordings as well. The effects and controls are preferably applied to the virtual camera and are applied either to the final composited media stream or only to selected parts.

According to another embodiment, the method further comprises storing at least one of the data of the one or more virtual objects, the three-dimensional representation of the real scene, the representation of the virtual scene, and the media stream in a storage device.

Furthermore, a computer-readable medium according to the present disclosure has instructions stored thereon, wherein said instructions, when installed and executed on a computing device, cause said computing device to automatically perform a method according to an embodiment of the present disclosure. In particular, the computer-readable medium may be accessed by a compositing workstation and a recording device and the instructions may be transferred to the compositing workstation and the recording device, respectively, which may both execute at least some of the instructions.

In particular, the instructions may configure the recording device to enable recording of a real scene and provide the recording to the compositing workstation. The instructions may further configure the composition workstation to receive the recording from the recording device, to create a three-dimensional representation of the real scene based on the recording, to synchronize a virtual camera inside a virtual scene with the recording device, and to generate a representation of the virtual scene using the virtual camera. The compositing workstation may be further configured by the instructions to compose at least the three-dimensional representation of the real scene with the representation of the virtual scene in order to generate a media stream, and to provide the media stream to the recording device. In response, the recording device may be configured by the instructions to receive the media stream and to present the media stream in real-time on the recording device, preferably, synchronous or with only a short delay to the recording of the real scene.

A camera device according to the present disclosure comprises means for recording a real scene, an output interface coupled to the means for recording, configured to provide the recording, an input interface configured to receive a media stream, and means for providing the media stream coupled to the input interface, wherein the media stream is generated by compositing at least a three-dimensional representation of the real scene with a representation of a virtual scene, wherein the three-dimensional representation of the real scene is created based on the recording, and the representation of the virtual scene is generated using a virtual camera inside the virtual scene, said virtual camera being synchronized with the camera device.

According to an embodiment, the media stream is provided synchronous to the recording of the real scene in real-time.

In a preferred embodiment, the camera device is a stereoscopic camera.

In a preferred embodiment, the camera device further comprises one or more sensors configured to capture depth information of the real scene, preferably at least one infrared sensor.

According to a particularly preferred embodiment, the output interface is further configured to provide parameters of the camera.

According to another embodiment, the camera device further comprises control means to control the camera device, including at least one of a mechanical control, a touchpad, and a remote device coupled to the camera.

Furthermore, a processing pipeline for compositing media streams according to the present disclosure is provided. The processing pipeline is implemented and executed on at least one computing device, and comprises an input module configured to receive a recording of a real scene from a real camera, an output module configured to provide a media stream to the real camera, and one or more interconnected processing modules. The processing modules are configured to create a three-dimensional representation of the real scene based on the recording, synchronize a virtual camera inside a virtual scene with the real camera, generate a representation of the virtual scene using the virtual camera, and compose at least the three-dimensional representation of the real scene with the representation of the virtual scene to generate the media stream.

In a preferred embodiment, the output module is further configured to provide the media stream at one or more display devices.

According to a further embodiment, the pipeline further comprises a processing module configured to store at least one of the data of the one or more virtual objects, the three-dimensional representation of the real scene, the representation of the virtual scene, and the media stream in a storage device coupled to the pipeline.

Preferably, the one or more processing components of the pipeline are configured to execute at least one of the processing steps of the previously described method according to embodiments of the present disclosure. Therefore, any processing steps of the method may be executed by the processing components in any suitable way according to the present disclosure.

Furthermore, a system for providing composite media streams according to the present disclosure comprises at least one real camera according to an embodiment of the present disclosure, a compositing unit coupled to the at least one real camera, including a pipeline according to another embodiment of the present disclosure, a computer graphics engine coupled to the pipeline of the compositing unit, configured to generate a representation of a virtual scene, and at least one network configured to transfer media streams between the at least one real camera, the compositing unit, and the computer graphics engine.

According to a preferred embodiment, the system further comprises one or more sensors coupled to the compositing unit via the network, configured to capture depth information of the real scene, preferably including at least one infrared sensor.

According to another embodiment, the system further comprises at least one motion tracking device coupled to the compositing unit via the network, configured to track motion within the real scene.

In yet another embodiment, the motion tracking device is configured to track motion data of at least one of the real cameras.

According to a particularly preferred embodiment, the computer graphics engine is further configured to generate the representation of the virtual scene including updating computer graphics objects in the virtual scene.

According to another embodiment, the computer graphics engine is further configured to generate the representation of the virtual scene including tracking lights in the real scene and updating corresponding virtual lights in the virtual scene based on the tracked lights.

In yet another preferred embodiment, the system further includes one or more display devices coupled to the compositing unit via the network, configured to display the media stream.

In a further embodiment, the system further comprises a remote device coupled to the real camera, configured to control the real camera.

According to another preferred embodiment, the system further comprises a storage device coupled to the compositing unit via the network, configured to store at least one of the data of the one or more virtual objects, the three-dimensional representation of the real scene, the representation of the virtual scene, and the media stream.

### BRIEF DESCRIPTION OF THE DRAWINGS

Further details, aspects and characteristics of the present disclosure are described in example embodiments with reference to the figures of the accompanying drawings, in which:
FIGURE 1 shows a flow diagram of a method for providing composite media streams according to an aspect of the present disclosure;
FIGURE 2 shows a schematic illustration of a system according to an aspect of the present disclosure; and
FIGURE 3 shows a workflow of a system according to another aspect of the present disclosure.

### DETAILED DESCRIPTION

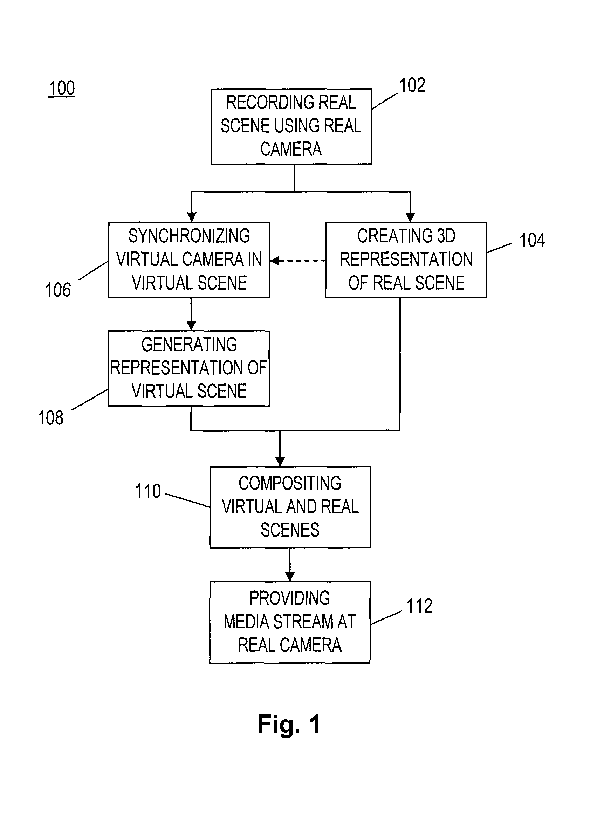

FIGURE 1 shows a flow diagram of a method for providing composite media streams according to an embodiment of the present disclosure. The method 100 may be executed on a compositing workstation, which may be coupled to a recording device, such as a real camera. In step 102, the real camera may be used to capture a real scene. The recording of the real scene and any further related data, such as sensor and motion tracking data, may be directly transferred to the compositing workstation. The received recording and any further data is processed in step 104 to create a 3D representation of the real scene. The further data, such as motion tracking data and parameters of the real camera, as well as the recording may be further used to synchronize a virtual camera inside a virtual scene with the real camera in step 106. As indicated by the dashed line between steps 104 and 106, further information, which may, for example, be derived from the 3D representation of the real scene, may be used as well for synchronization 106 of the virtual camera. The virtual camera is used in step 108 to generate a representation of the virtual scene. The processing in step 108 may comprise updating of computer graphics objects and geometries of the virtual scene by a real-time 3D graphics engine.

At least the results of steps 104 and 108, such as at least two input media streams related to the 3D representation of the real scene and the representation of the virtual scene, respectively, may be composited in step 110 to generate an output media stream. In addition, further input streams may be included in the composited media stream, such as pre-recorded media streams, and parts of the original recording. The resulting media stream is provided at the real camera in step 112, thereby enabling an instantaneous feedback about the final resulting picture in real-time. In particular, all spatial transformations of the real camera during recording in step 102 have an immediate effect on any subsequent processing steps, such as the synchronization of the virtual camera in the virtual scene and updates of the 3D representation of the real scene. Thus, a composited media stream directly corresponding to the recording of the real scene is delivered in real-time to the real camera and enables an immediate feedback for the operator of the real camera.

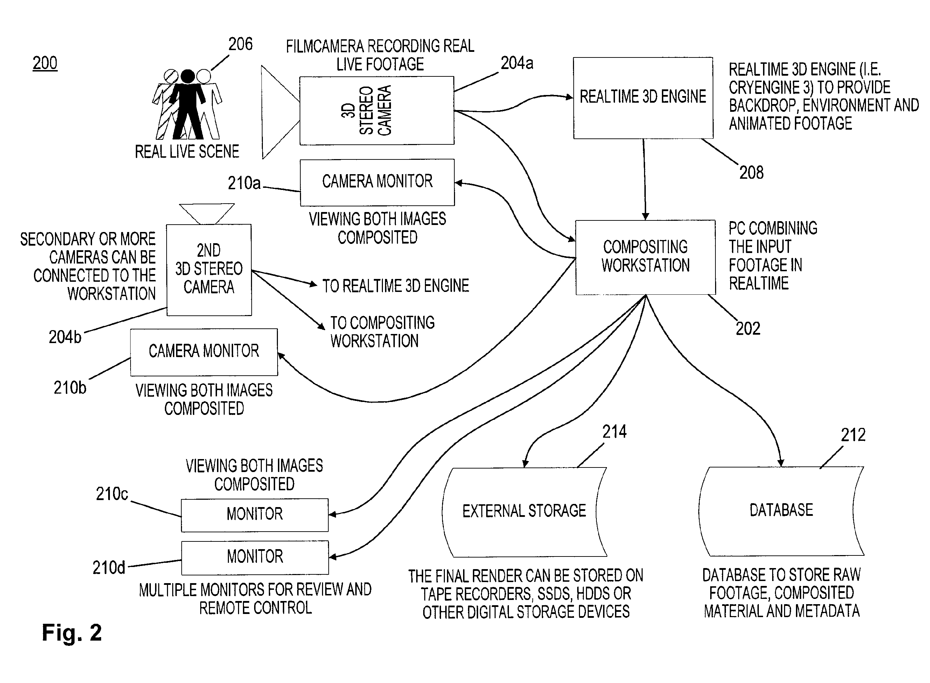

FIGURE 2 shows a schematic illustration of a system according to an embodiment of the present disclosure. The core of the system 200 is a compositing workstation 202 that may be coupled to one or more real cameras 204a, 204b, for example, via a direct link or any other communication network enabling a bidirectional transfer of media data. The real camera 204a and optionally the real camera 204b may simultaneously record a real scene 206 and transfer the respective recordings to the compositing workstation 202. In addition, the real camera 204a and optionally the real camera 204b may capture and/or provide additional data, such as data related to camera settings, depth information, and others and transfer the respective data to the compositing workstation 202. Furthermore, the real camera 204a and optionally the real camera 204b may transfer the additional data and the recordings to a real-time 3D engine 208, for example, via a direct link or any other communication network enabling a bidirectional transfer of media data. Also, the same network may be used, which connects the real cameras 204a, 204b with the compositing workstation 202. As an alternative or in addition, the compositing workstation 202 may initially process any data from the real cameras 204, 204b and provide suitable data to the real-time 3D engine 208.

The compositing workstation 202 combines the input media data of two or more input media streams, such as the processed recording of the real cameras 204a, 204b and the output of the real-time 3D engine 208, into one real-time composition, preferably in high quality for final use. The composited media stream is provided to a monitor 210a of the real camera 204a and optionally to a monitor 210b of the real camera 204b. The composited media stream may be transferred via the communication network between the real cameras 204a, 204b and the compositing workstation 202, or via any other dedicated communication network or link. For example, the compositing workstation 202 may be configured to broadcast the composited media stream to the monitors 210a, 210b, as well as to a plurality of further monitors, such as monitors 210c, 210d, which enable a review of the resulting media steam. Yet, it is to be understood that the resulting media stream may be broadcasted using one or more dedicated networks and that also a different transmission technique, such as unicast or multicast may be used, to provide the composited media stream at respective monitors 210a, 210b, 210c, and 210d.

Each real camera 204a, 204b may be a stereoscopic camera, equipped with two or more lenses and corresponding image sensors for stereoscopic filming. Thus, the output of a respective real camera 204a, 204b received at the compositing workstation 202 may deliver recording data in a 3D stereoscopic format, comprising, for example, at least two images from two separate recording sensors in each frame. Furthermore, other recording sensors may be used in at least some of the real cameras 204a, 204b to increase the accuracy of the recorded data and, in particular, the accuracy and completeness of depth information related to the real scene 206. However, it is to be understood that the real cameras 204a, 204b may also use one sensor for recording only, in which case the system 200 may comprise further means (not shown) to capture related depth information. For example, one or more infrared (IR) sensors may be used to capture depth information. In addition, the IR sensors may be used in combination with stereoscopic cameras to further refine the accuracy of the depth information. The depth information may be provided as a separate image to be used in the real-time calculation or a subsequent processing.

The recording of the live scene may also comprise recording of sound, such as stereo sound or 3D sound, via one or more microphones (not shown). Further to the data of the recording, the real cameras 204a, 204b may provide metadata, such as its own parameters and settings, e.g., aperture, shutter time, focus, etc.

The compositing workstation 202 may calculate the position, rotation and velocity of the real cameras 204a, 204b through the delivered stereo images and depth information. Thus, the real cameras 204a, 204b may not require any additional equipment to capture the spatial transformation. As an alternative, the real cameras 204a, 204b may also be tracked via a motion capture system (not shown). The motion capture system may transfer the camera's position, rotation and velocity and any other related data to the compositing workstation 202 and the real-time 3D engine 208, accordingly. Any suitable motion capture system may be used, for example, an optical or magnetic system employing passive or active markers and sensors, and the present disclosure is not restricted to a particular tracking technology.

Each real camera 204a, 204b, as well as its settings and parameters, movement, and influence on the subsequent processing, such as synchronization with a virtual camera used by the real-time 3D engine 208, and any further related parameters, which may affect the media stream generated by the compositing workstation 202 or one of its input media streams can be controlled via control means (not shown) provided on or communicating with the real camera 204a, 204b. The control means may further allow to adjust parameters of the compositing workstation 202 and/or the real-time 3D engine 208. The control means may be any conventional mechanical controls on the real camera 204a, 204b, or a touchpad on the real camera 204a, 204b, which may be provided as a touch functionality of the monitor 210a, 210b. The control means may also be provided remotely, for example as a connected processing device, which may be configured to control the respective aforementioned functions, parameters, and settings of the real camera 204a, 204b, the compositing workstation 202, the real-time 3D engine 208, and other components of the system 200. The processing device may be provided as a portable device or a mobile communication device, such as a laptop, palmtop, tablet PC, pad, smart phone, or any other suitable device providing an input interface for specification of related data and an output interface for transmitting the data to the respective component of the system 200. Hence, the compositing workstation 202 and the real-time 3D engine 208 may be automatically operated without any direct input from a local operator or a user. In particular, the respective components of the system 200 may be remotely operated by the camera operator only, for example, using the control means, thereby enabling a fast control and adaptation of the processing to the needs of the camera operator. However, it is to be understood, that the compositing workstation 202 and the real-time 3D engine 208 may also be controlled by separate operators or users.

The real-time 3D engine 208 delivers a representation of a virtual scene of a CG environment, which corresponds to the real environment of the real scene 206. The virtual scene may contain any geometry, such as a full landscape, buildings, objects, and animated characters, e.g., human beings, animals, or other animated and/or articulated synthetic characters. The 3D environment and the geometry may be fully simulated using physical simulation, collision detection, light and shadow simulation and others. The real-time 3D engine 208 may synchronize both scenes by receiving a live stream of camera data either from each respective real camera 204a, 204b, or from the compositing workstation 202, and automatically updating the CG environment in response to the data. In particular, the spatial transformation, including position, rotation and velocity of a virtual camera inside of the CG environment is updated by the spatial transformation of the respective real camera, such as real camera 204a. Hence, the virtual camera is placed at the same position, oriented into the same direction and moved with the same velocity as the real camera 204a. Furthermore, the settings and parameters of the virtual camera are adjusted to corresponding settings and parameters of the real camera 204. The virtual camera is used to generate a representation of the virtual scene, comprising all necessary data about the visible CG objects and geometry. In addition, the real-time 3D engine 208 may generate a rendering of the virtual scene including a depth map and send the results to the compositing workstation 202, for example as a live feed. The real-time 3D engine 208 may also handle more than one virtual camera, delivering a multi-camera media stream. For example, a second virtual camera may be associated with the real camera 204b and the real-time 3D engine 208 may generate and provide a second live feed of the respective representation of the virtual scene to the compositing workstation 202.

The compositing workstation 202 processes all incoming data in real-time. The incoming data includes the recording, such as stereo images coming from one or more sensors or cameras 204a, 204b. The incoming data may also further include at least some of (1) additional data, such as IR images for a precise depth analysis, (2) camera positioning data, and (3) any results from the real-time 3D engine 208. The compositing workstation 202 may use the stereo images and/or the IR data to calculate the depth of the objects visible in the real scene 206. The depth information is used to extract recorded objects from the images of the recording. The depth information is further used during creation of the 3D representation of the real scene 206.

The compositing workstation 202 combines all recorded data, received from the real cameras 204a, 204b into one 3D representation of the real scene 206 and combines the 3D representation with all received representations of the virtual scene in one composited media stream. The compositing workstation 202 may output at least one of the representation of the real scene 206, the representation of the virtual scene, the composited media stream or parts thereof in different video or image formats, such as a stereoscopic video, and as 3D geometry data. The composition of the representations and media streams involves compositing of particular objects and geometries in the respective representations in the resulting media stream by placing them correctly in 3D space according to their position or related depth information the input streams are combined in real-time. Thus, all changes and modifications may be directly evaluated.

The compositing workstation 202 may output any combination of data, such as at least one of (1) the full composite media steam as a stereo or 2D film, (2) the 3D representation of the real scene 206, including the generated meshes, textures and animation data, as well as a rendering thereof (3) the representation of the virtual scene, as well as a rendering thereof, (4) the composite data, including 3D depths masks, color layers, etc. and (5) camera tracking data and other sensor data related to the real scene 206 and the real cameras 204a, 204b. Any such combination of output data may be transferred to respective monitors 210a, 210b on the real cameras 204a, 204b and to further monitors 210c, 210d. The picture of the monitor 210a, 210b may display the composited signal, or any aforementioned variation the camera operator wants to see. The pictures on the monitors 210a, 210b, 210c, 210d are updated in real-time with the same speed as the material is being recorded. Thus the camera operator can work in his usual way. In addition, he will directly see on his monitor any virtual object "blocking" his view and/or intersecting with a real object in an undesirable way, and may therefore immediately adjust his position and/or the framing of the camera in real-time. Alternatively, the camera operator may direct an operator of the real-time 3D engine 208 to adjust the CG environment. Also, the camera operator may use any available control means to adjust parameters and settings of the composition of the media streams to influence the results in real-time.

The output of the compositing workstation 202, such as CG data related to individual virtual objects may be saved for future use. For example, the compositing workstation 202 may transfers all output data to a database 212 for storage. The database 212 may store all data, raw footage, metadata and composite material on connected storage devices. For example, the stored data can be accessed later on to revisit any editing. Also, stored data can be used in future processing to refine the quality of the 3D representation of the real scene 206. In addition, the compositing workstation 202 may render the final scenes or any other material to external storage devices 214, such as tape recorders, hard disks, SSDs, or other digital and analogue storage devices. The final material may also be directly copied to the storage device 214 from the database 212. In particular, the final copying process takes no extra time for rendering, since the material has already been rendered in the final quality, or in case of modifications the material can be re-rendered in real-time during copying. Thus, any recorded data can be stored in final quality, since the system 200 works in real-time at any stage of the processing. The system 200 may store any further necessary metadata together with the visual pictures, which may, for example, indicate how a scene was set up, in order to facilitate later changes without additional stored data on different systems.

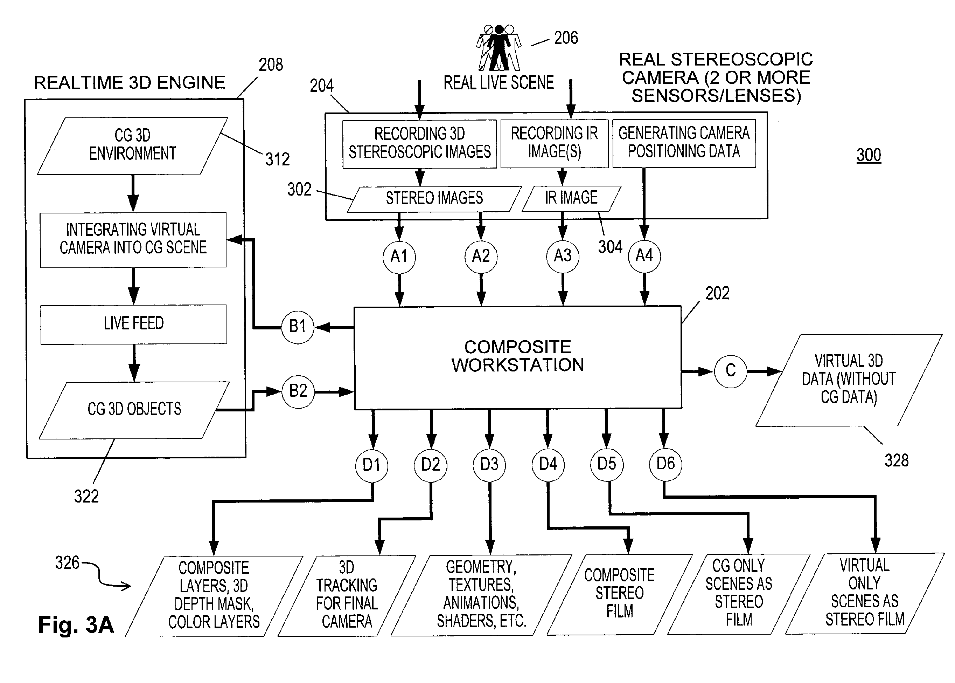

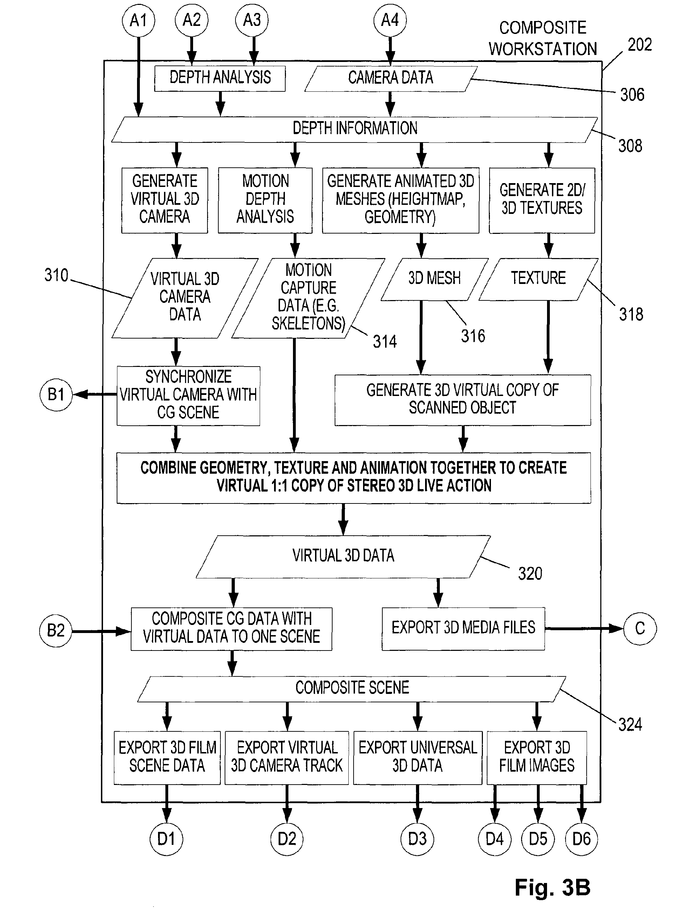

FIGURE 3 shows a workflow of a system according to an aspect of the present disclosure. The system 300 may be similar to the system 200 of FIGURE 2. Therefore, reference signs of FIGURE 2 have been used to denote similar components in FIGURE 3. In particular, the system 300 may comprise a compositing workstation 202, a stereoscopic camera 204, and a real-time 3D engine 208, which may correspond to the workstation 202, one of the real cameras 204a, 204b, and the real-time 3D engine of system 200 in FIGURE 2.

The stereoscopic camera 204 records stereoscopic images 302 and IR images 304 of a real scene 206 and provides the recording data to the compositing workstation 202. In addition, camera data 306, including parameters and settings of the stereoscopic camera 204 are retrieved by the compositing workstation 202. A depth analysis is performed on the stereo images 302 and the IR images 304, and the results are combined with the camera data 306 to derive depth information 308 of the real scene 206.

The depth information 308 together with the other data is used to compute camera data 310 of a virtual camera, which is used to synchronize a three-dimensional CG environment provided by the real-time 3D engine 208. The depth information 308 is further used to analyze the recorded real scene 206. This involves a motion depth analysis related to the recording 302 and the depth information 308, resulting in motion capture data 314 and related data structures, such as skeletons for articulated objects. Furthermore, the compositing workstation 202 may use the depth information 308 and further data to generate animated 3D meshes 316, involving heightmaps and geometries, as well as textures 318. The meshes 316 and textures 318 are used to generate a 3D visual copy of the recorded objects in the real scene 206. In a further processing step, the meshes 316 and textures 318 together with any motion capture data 314 are combined to create a three-dimensional representation 320 of the real scene 216, which is further used as a first input media stream.

As described above, the real-time 3D engine 208 simulates the CG environment 312 in real-time. Any update of the virtual camera using the camera data 310 is directly processed to generate a representation 322 of the virtual scene visible to the virtual camera in the CG environment 312. The representation is provided to the compositing workstation 202 as a second input media stream.

The compositing workstation 202 combines the first media stream, including the 3D representation 320 of the real scene 216, with the second media stream, including the representation 322 of the virtual scene, into one media stream, including a representation 324 of a composite scene. The compositing workstation 202 may provide the representation 324 of the composite scene or parts thereof in a variety of formats 326. For example the compositing workstation 202 may export 3D film scene data as composite layers, including 3D depth masks, color layers, and others. Furthermore, a virtual 3D camera track may be exported as 3D tracking data for a final camera. Also, universal 3D data may be exported, such as geometries, textures, animations, shaders, and others. In addition, 3D film images may be exported, including the composite stereo film, the computer graphics scenes, and the virtual scenes as a stereo film. The compositing workstation 202 may also export data of the three-dimensional representation 320 as virtual 3D data 328. At least some of the formats 326 and the virtual 3D data 328 of the real scene 206 may be directly transmitted to the stereoscopic camera 204 and displayed thereon to enable an instantaneous feedback about the resulting image.

Embodiments of the present disclosure enable compositing of media streams in real-time, combining a recording of a real live scene or other video footage with 3D computer graphics rendered in real-time. The compositing may involve a computation of depth information and an optional use of masking, for example, color masks. In particular, embodiments of the present disclosure enable synchronization of a virtual camera inside of a virtual 3D environment with movement data and other parameters and settings, including all camera control functions, of a real camera recording the real scene. Thus, the virtual camera is updated in real-time and directly follows the movements of the real camera. Embodiments of the present disclosure also enable a generation of 3D meshes and 3D textures by using the 3D stereo images and aforementioned algorithms to construct geometry, depths and color of objects and textures inside a virtual 3D environment of a representation of the real scene. Furthermore, embodiments of the present disclosure enable motion capturing of 3D full body animations, including body motion and facial animations by using the 3D stereo images and aforementioned algorithms that construct animation data inside the virtual 3D environment. Objects and actors performing and moving in the recorded real scene are progressively motion captured, including the face, hands, and body based on distance, without additional equipment, such as markers and special cameras. The composited media streams are directly provided at the recording camera simultaneously to the recording of the real scene or with a short delay only. Thus, the present disclosure allows for an instantaneous feedback and greatly reduces the production time of films integrating computer graphics with real scenes.

Even though methods according to embodiments of the present disclosure have been described with reference to example embodiments, it is to be understood that particular processing steps may be modified, added and omitted without leaving the scope of the present disclosure. Also, the processing steps may be performed in a different order from the examples described.

Also, it is to be understood that many modifications may be provided to the example embodiments without leaving the scope of the invention. In particular, the invention may be practiced within the scope of the claims differently from the examples described and the described features and characteristics may be of importance for the invention in any combination.

## Claims

1. A method for providing composite media streams, comprising:
recording a real scene using a real camera;
creating a three-dimensional representation of the real scene based on the recording;
synchronizing a virtual camera inside a virtual scene with the real camera;
generating a representation of the virtual scene using the virtual camera;
compositing at least the three-dimensional representation of the real scene with the representation of the virtual scene to generate a media stream; and
providing the media stream at the real camera.

2. The method of claim 1, wherein the media stream is provided at the real camera synchronous to the recording of the real scene in real-time.

3. The method of claim 1 or 2, wherein recording the real scene further includes capturing depth information of the real scene using one or more sensors, preferably at least one infrared sensor.

4. The method according to one of the preceding claims, wherein creating the three-dimensional representation of the real scene includes one or more of computing depth information based on the recording; and generating data for one or more virtual objects based on the recording, including at least one of motion data, meshes, and textures.

5. The method of claim 4, wherein creating the three-dimensional representation of the real scene further includes one or more of:
updating previously generated meshes and textures of a virtual object based on the current recording;
selecting at least some of the virtual objects to be included in the three-dimensional representation; and
combining the generated data, including, for each selected virtual object, applying at least some of the textures of the virtual object on the meshes of the virtual object, and animating the virtual object using the motion data.

6. The method according to one of the preceding claims, wherein synchronizing the virtual camera comprises adjusting camera parameters of the virtual camera based on at least some camera parameters of the real camera.

7. The method of claim 6, wherein adjusting camera parameters includes adjusting at least one of position, orientation, and velocity of the virtual camera.

8. The method of claim 6 or 7, further comprising deriving at least some of the camera parameters from at least one of stereo images of the recording, motion tracking data of the real camera, and data provided by the real camera.

9. The method according to one of the preceding claims, wherein generating the representation of the virtual scene includes updating computer graphics objects in the virtual scene, and/or said compositing includes synchronizing the three-dimensional representation of the real scene with the representation of the virtual scene using at least one of parameters of the real and virtual cameras and one or more reference objects.

10. A camera device, comprising:
means for recording a real scene;
an output interface coupled to the means for recording, configured to provide the recording;
an input interface configured to receive a media stream; and
means for providing the media stream coupled to the input interface, wherein the media stream is generated by compositing at least a three-dimensional representation of the real scene with a representation of a virtual scene, wherein the three-dimensional representation of the real scene is created based on the recording, and the representation of the virtual scene is generated using a virtual camera inside the virtual scene, said virtual camera being synchronized with the camera device.

11. The device of claim 10, wherein the media stream is provided synchronous to the recording of the real scene in real-time.

12. The device of claim 10 or 11, wherein the device is a stereoscopic camera, and/or further comprises one or more sensors configured to capture depth information of the real scene, preferably at least one infrared sensor.

13. A processing pipeline for compositing media streams, said processing pipeline being implemented and executed on at least one computing device, comprising:
an input module configured to receive a recording of a real scene from a real camera;
an output module configured to provide a media stream to the real camera; and
one or more interconnected processing modules configured to:
create a three-dimensional representation of the real scene based on the recording;
synchronize a virtual camera inside a virtual scene with the real camera;
generate a representation of the virtual scene using the virtual camera; and
compose at least the three-dimensional representation of the real scene with the representation of the virtual scene to generate the media stream.

14. The pipeline of claim 13, wherein creating the three-dimensional representation of the real scene includes one or more of computing depth information based on the recording; and generating data for one or more virtual objects based on the recording, including at least one of motion data, meshes, and textures.

15. A system for providing composite media streams, comprising:
at least one real camera according to one of the claims 10 to 12;
a compositing unit coupled to the at least one real camera, including a pipeline according to one of the claims 13 to 14;
a computer graphics engine coupled to the pipeline of the compositing unit, configured to generate the representation of the virtual scene; and
at least one network configured to transfer media streams between the at least one real camera, the compositing unit, and the computer graphics engine.
